# FASCICULE DE BREVET EUROPEEN

(11) **EP 1 759 065 B1**
(45) Date de publication et mention de la délivrance du brevet: **29.05.2013**
(21) Numéro de dépôt: 05775323.8
(22) Date de dépôt: 08.06.2005
(51) Int. Cl.: E02B 3/12

(54) **ENSEMBLE ET METHODE D'INSTALLATION D'UNE STRUCTURE SOUS-MARINE**
ANORDNUNG UND VERFAHREN ZUR INSTALLATION EINER UNTERWASSERKONSTRUKTION
ASSEMBLY AND METHOD FOR INSTALLATION OF AN UNDERWATER STRUCTURE

(30) Priorité: 10.06.2004 FR 0406293
(43) Date de publication de la demande: 07.03.2007
(73) Titulaire: Technip France, 92400 Courbevoie (FR)
(72) Inventeur: RENARD, Didier, F-92400 Courbevoie (FR); ROUTEAU, Sylvain, F-92210 Saint Cloud (FR)
(74) Mandataire: Bertrand, Didier
(86) Numéro de dépôt international: PCT/FR2005/001411
(87) Numéro de publication internationale: WO 2006/003307

(56) Documents cités:
- DE-A1- 2 621 552
- US-A- 3 699 686
- US-A- 3 983 705
- US-A- 4 135 843
- US-A1- 2002 088 622
- US-B1- 6 290 431
- PATENT ABSTRACTS OF JAPAN vol. 011, no. 090 (M-573), 20 mars 1987 (1987-03-20) & JP 61 242209 A (OHBAYASHIGUMI LTD), 28 octobre 1986 (1986-10-28)

## Description

La présente invention se rapporte à un ensemble et à une méthode d'installation d'une structure sous-marine sur le fond marin.

Un domaine d'application envisagé est notamment, mais non exclusivement, celui du raccordement des conduites sous-marines dans le fond marin.

Des systèmes de raccordement entre deux ensembles mobiles l'un par rapport à d'autres sont connus. Ils nécessitent généralement l'intervention d'un robot sous-marin (ROV en langue anglaise, acronyme de : « Remotely Operated Vehicule ») lequel comporte des moyens de propulsion propres et est équipé de caméras, de manipulateurs et d'un système de contrôle permettant à un opérateur de le commander à distance depuis la surface.

Toutefois, le fond marin est très souvent recouvert de vase, de sédiments et de particules diverses, lesquelles sont susceptibles de produire des nuages tout autour du robot, par l'Intermédiaire desdits moyens de propulsion, lorsque ces derniers sont orientés vers le fond marin. Un tel nuage occulte nécessairement le champ des caméras et par conséquent la visibilité de l'opérateur. Cette diminution de la visibilité gène la progression des opérations de raccordement et parfois, oblige à interrompre l'intervention du robot. En outre, les particules en suspension peuvent se déposer entre les joints des conduites à raccorder, ce qui est susceptible d'altérer la qualité de l'étanchéité de la jonction. <A>

Afin de diminuer les possibilités d'apparition des nuages de particules il a été imaginé de limiter le basculement du robot sous-marin. De la sorte, les moyens de propulsion dudit robot ne s'éloignent pas d'une direction horizontale sensiblement parallèle au fond marin, ce qui évite d'entraîner en mouvement les couches d'eau situées près du fond marin A : Le document US6290431 divulgue la mise en oeuvre de brosses et de jets d'eau pour nettoyer l'environnement de la conduite. et par conséquent de générer des nuages de particules. On pourra se référer notamment à la demande FR 2 763 636 qui décrit un tel dispositif.

Toutefois, ces dispositifs adaptés à maintenir horizontalement le robot sous-marin sont relativement complexes et limitent les degrés de liberté du robot.

Le document US 3 983 705 divulgue un procédé de protection du fond marin autour d'une installation sous-marine faisant appel à des tapis pré-enroulés.

En outre, la hauteur des structures sous-marines par rapport au fond marin est généralement importante de manière à opérer à une certaine distance du fond avec les robots sous-marins et ainsi ne pas perturber les couches d'eau situées près du fond avec les moyens de propulsion.

Cependant, de telles structures sont nécessairement de dimensions plus importantes et elles nécessitent des moyens d'installation adaptés en conséquences, ce qui grève globalement les coûts d'installation.

Un problème qui se pose et que vise à résoudre la présente invention est alors de proposer une méthode d'installation d'une structure sous-marine sur le fond marin qui permette d'éviter la formation de nuages de particules au voisinage du fond et par là-même, qui permette non seulement de réduire la taille desdites structures, mais aussi de réduire le temps d'intervention du robot sous-marin.

Dans ce but, selon un premier objet, la présente invention propose une méthode d'installation d'une structure sous-marine sur le fond marin avec un robot sous-marin selon les caractéristiques de la revendication 1.

Ainsi, une caractéristique de la présente Invention réside dans le confinement de la vase ou des particules déposées sur le fond marin en recouvrant ce dernier d'un tapis de protection. L'une des faces du tapis de protection est donc en appui contre le fond marin tandis que la face opposée, externe, est orientée vers la surface de l'eau. De la sorte, lorsque les moyens de propulsion du robot sous-marin sont orientés dans une direction qui rencontre le fond marin, l'eau en mouvement s'écoule sur la paroi de la face externe du tapis de protection sans entraîner en mouvement les particules situées en dessous. Ainsi, non seulement le robot sous-marin peut être guidé à une distance proche du fond marin, ce qui permet l'installation de structures de faible hauteur mais au surplus, le temps d'intervention du robot est optimisé puisque à aucun moment la visibilité n'est réduite.

Selon l'invention suivant une première étape, on plie ledit tapis de protection, et suivant une seconde étape, on déplie ledit tapis de protection pour recouvrir ledit fond marin. De la sorte, le tapis enroulé est protégé des courants marins de surface au cours de sa descente, comme on l'expliquera plus en détail dans la suite de la description. En outre, après ladite première étape certains éléments de ladite structure sont susceptibles d'être installés sur le fond marin sans que le tapis de protection ne gêne l'installation. Ensuite, le tapis de protection est adapté à être déplié autour de la structure sous-marine.

Selon l'invention, suivant ladite seconde étape on injecte sous pression un fluide dans des manches étanches flexibles solidaires dudit tapis de protection, lesdites manches étant préalablement vidées et repliées. Ainsi, lesdites manches étanches flexibles constituées par exemple de tuyaux en toile plastifiée du type tuyaux à incendie, permette de former des moyens de déploiement relativement simples et aisés à mettre en oeuvre.

Avantageusement, et suivant ladite première étape, on replie ensemble ledit tapis et lesdites manches par enroulement, selon une direction déterminée et lesdites manches sont solidarisées audit tapis selon ladite direction donnée. De la sorte, dès qu'un fluide sous pression est injecté dans lesdites manches, ces dernières tendent à s'étendre longitudinalement en se rigidifiant et elles entraînent alors ledit tapis de protection en déroulement dans un sens opposé au sens d'enroulement.

Selon l'invention, ledit robot sous-marin comporte des moyens d'injection commandables de fluide sous pression, et on raccorde lesdites manches auxdits moyens d'injection commandables pour déplier ledit tapis de protection. Ainsi, grâce au robot sous-marin qui présente déjà des moyens d'injection constitués d'une pompe, le déroulement des manches est susceptible d'être réalisé aisément sans coût supplémentaire.

De façon particulièrement avantageuse, ladite structure comprenant au moins un élément de structure adapté à être immergé depuis une installation de surface et à être appuyé sur ledit fond marin, on équipe ledit élément de structure dudit tapis de protection duquel lesdites manches sont solidaires, et on replie ledit tapis de protection avant l'immersion dudit élément de structure. Ainsi, le tapis de protection est susceptible d'être accroché et replié le long de l'élément de structure de façon relativement compacte, ce qui permet de descendre ledit élément sur le fond marin sans être gêné par le tapis de protection.

En outre, on divise avantageusement ledit tapis de protection en portions pour recouvrir le fond marin autour de la structure. Ainsi par exemple, en divisant le tapis de protection en quatre portions égales et en disposant lesdites portions repliées autour de la structure, opposés deux à deux, leur déploiement permet de recouvrir au moins partiellement le fond marin autour de la structure.

Selon un autre objet, la présente invention propose un ensemble permettant de mettre en oeuvre la méthode d'installation précitée, ledit ensemble comprenant des moyens pour recouvrir ledit fond marin autour de ladite structure, d'un tapis de protection adapté à confiner lesdites particules sur ledit fond marin.

Ledit tapis de protection est constitué d'un matériau flexible adapté à être replié puis déplié ensuite de façon à recouvrir ledit fond marin. Ce matériau flexible est par exemple constitué d'une nappe de fibres non tissées résiliente et il est bien évidemment adapté à bloquer les particules contre le fond marin.

Selon l'invention, lesdits moyens pour recouvrir ledit fond marin comporte des manches étanches flexibles solidaires dudit tapis de protection, lesdites manches étant susceptibles d'être portées d'un premier état dans lequel elles sont repliées et vides vers un second état dans lequel elles sont remplies d'un fluide sous pression et où elles s'étendent longitudinalement. Ainsi lesdites manches étanches, formées par exemple de tuyaux en toile plastifiée sont adaptées à être enroulées sur elle-même avec le tapis de protection. De la sorte, l'air qu'elles contiennent est entièrement chassé à l'extérieur, et dès qu'on y réinjecte un fluide elles tendent à s'étendre longitudinalement en déroulant ledit tapis.

Par ailleurs, selon une caractéristique avantageuse lesdites manches sont solidarisées audits tapis selon une direction donnée qui correspond à la direction d'enroulement dudit tapis. De la sorte, dès qu'on injecte un fluide dans lesdites manches, ces dernières tendent à s'allonger selon la direction de déroulement du tapis de protection, ce qui permet d'optimiser l'énergie mécanique fournie par lesdites manches.

En outre, ledit robot sous-marin comportant des moyens d'injection commandables de fluide sous pression, lesdites manches sont munies de moyens de connexion permettant de raccorder lesdits moyens d'injection commandables auxdites manches. Ainsi, grâce au moyen de connexion permettant de raccorder les moyens d'injection et lesdites manches, et en commandant le robot sous-marin, on peut commander le déploiement du tapis de protection.

Ladite structure comprenant au moins un élément de structure adapté à être immergé depuis une installation de surface et à être appuyé sur ledit fond marin, ledit élément de structure est avantageusement équipé dudit tapis de protection duquel lesdites manches sont solidaires, ledit tapis de protection étant replié avant l'immersion dudit élément de structure. Ainsi, l'élément de structure est adapté à être descendu sur le fond marin, le tapis de protection replié ce qui évite de perturber la descente et de détériorer le tapis. Ce n'est qu'après que l'élément de structure a été déposé en appui sur le fond marin que le tapis de protection est déplié.

Par ailleurs, ledit tapis de protection est préférentiellement divisé en portions réparties autour dudit élément de structure de manière à pouvoir, tout d'abord être replié aisément tout autour de l'élément de structure et ensuite, pour qu'il puisse être déroulé radialement autour de cet élément de structure. Au surplus, les portions de tapis de protection, ne sont pas nécessairement strictement rectangulaires et elles peuvent présenter des parties repliées et enroulées dans des directions différentes. De la sorte, comme on l'expliquera plus en détail dans la description détaillée qui va suivre, tout le pourtour de la zone du fond marin sur laquelle l'élément de structure est appuyé, est susceptible d'être recouvert par ledit tapis de protection.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
- la Figure 1 est une vue schématique en perspective d'un élément de l'invention ;
- la Figure 2 est une vue schématique en coupe droite de l'élément illustré sur la Figure 1 tel qu'enroulé ;
- la Figure 3 est une vue schématique en perspective montrant une partie de structure sous-marine équipée de l'élément illustré sur la Figure 2 dans un premier état ;
- la Figure 4 est une vue schématique en perspective d'une structure illustrée sur la Figure 3, équipée de l'élément illustré sur la Figure 2 dans un second état ;
- la Figure 5 est une vue schématique en perspective d'une structure identique à celle des Figures 3 et 4 précédentes, équipée d'un élément selon une variante particulière de réalisation.

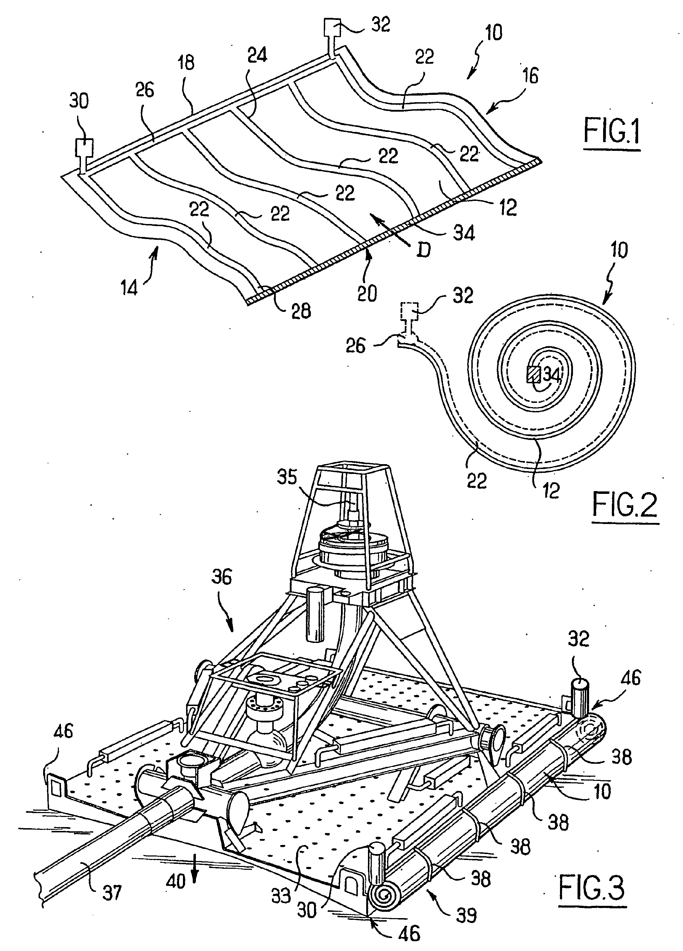

La Figure 1 montre un tapis de protection 10 conforme à l'invention. Ce tapis de protection 10, présente une nappe textile non tissée 12 du type géotextile, utilisée notamment dans les applications de la construction pour séparer ou stabiliser différents granulats par exemple et/ou filtrer les eaux de pluies sans que ces différents granulats ne se mélangent.

Ces nappes textiles non tissées 12 sont constituées d'un voile de fibres relativement résilient, par exemple en polypropylène. Elles présentent une épaisseur comprise entre 200 et 900 micromètres, par exemple 500 micromètres et une masse surfacique comprise entre 50 et 500 g/m², par exemple 150 g/m².

La nappe textile non tissée 12 est ici de forme rectangulaire, elle présente deux bords latéraux opposés 14, 16, un bord d'accrochage 18 opposé à un bord libre 20.

Par ailleurs, des manches étanches flexibles 22 sont solidarisées par couture ou par collage à la nappe textile 12, espacées les unes des autres, parallèlement entre elles et aux deux bords latéraux 14, 16. Ces manches étanches flexibles 22 sont par exemple constituées de tuyaux en toile plastifiée utilisés notamment pour les tuyaux à incendie. Elles présentent l'avantage de pouvoir être aplaties, leurs deux parois opposées en appui l'une contre l'autre, lorsqu'elles sont vides et ainsi de pouvoir être enroulées de manière compacte. En revanche, dès qu'un fluide est injecté sous pression dans ces manches étanches flexibles 22 enroulées, elles s'étendent longitudinalement et deviennent relativement rigides.

Ici, ces manches 22 sont raccordées ensemble dans leur extrémité 24 située près du bord d'accrochage 18 par un collecteur 26 tandis que leur extrémité opposée 28, située près du bord libre 20 est obturée. Le collecteur 26 qui s'étend le long du bord d'accrochage 18 présente deux extrémités de raccordement 30, 32, et les manches étanches flexibles 22 raccordées au collecteur 26 forment un circuit fermé entre les deux extrémités de raccordement 30, 32.

En outre, une tige ou latte 34 relativement pesante est solidarisée au bord libre 20 de la nappe textile 12. Cette tige peut être remplacée par un câble ou un tube.

La Figure 2, illustre le tapis de protection 10 sous une forme enroulée. On retrouve sur cette Figure la latte 34 autour de laquelle la nappe textile 12 et les manches étanches flexibles 22 ont été enroulées. Ces manches étanches flexibles 22 sont ici représentées en traits interrompus afin de mieux les distinguer.

Le tapis de protection 10 ainsi enroulé selon une direction D parallèle aux bords latéraux opposés 14, 16 et aux manches 22, est relativement compacte et peu encombrant, et les manches étanches flexibles 22 sont sensiblement enroulées avec la nappe textile 12 chacune dans un même plan.

On se référera maintenant à la Figure 3 qui illustre en perspective un élément de structure 36 d'une structure sous-marine, équipé d'un tapis de protection 10 tel que représenté en coupe droite sur la Figure 2. Cet élément de structure 36 comprenant une plaque d'appui rectangulaire 33 est solidaire d'une conduite sous-marine de fond 37 et il permet de la connecter, par exemple à une conduite montante non représentée par l'intermédiaire d'un coude, prolongeant la conduite sous-marine de fond 37, lequel coude est terminé par une extrémité de raccordement 35. Le tapis de protection 10 est ici maintenu enroulé, le long d'un bord 39 de la plaque d'appui rectangulaire 33 de l'élément de structure 36, par des attaches 38 du type de celles utilisées pour maintenir ensemble les câbles d'un chemin de câbles. Elles s'en distinguent toutefois par la présence d'une amorce frangible, qui permet leur rupture dès qu'elles subissent une force d'élongation supérieure à un seuil déterminé.

Selon une autre variante d'exécution non représentée, le tapis de protection 10 ainsi enroulé est maintenu par des bandes équipées de bouclettes et de crochets formant Velcro et refermées sur elles-mêmes. De la sorte, et de la même façon que les attaches précitées, dès que ces bandes subissent une élongation, les crochets libèrent les bouclettes et les bandes se détachent. Par ailleurs, le tapis peut également être protégé par une enveloppe souple ou rigide.

Ainsi équipé, l'élément de structure 36 est adapté à être immergé depuis une installation de surface non représentée, jusque dans le fond marin 40 afin d'y reposer, ladite plaque d'appui rectangulaire 33 contre ledit fond marin 40. L'extrémité de raccordement 35 se trouve alors située à une distance du fond marin 40, inférieure à 10 m, par exemple à 5 m.

Par ailleurs, la Figure 3 montre les deux extrémités de raccordement 30, 32, lesquelles sont susceptibles d'être raccordées à des moyens d'injection de fluide sous pression d'un robot sous-marin non représenté. Les robots sous-marins, téléguidés depuis la surface et adaptés au raccordement des conduites sous-marines comportent habituellement des pompes d'injection d'eau aptes à aspirer l'eau de mer pour la refouler sous pression. Ainsi, le robot sous-marin est adapté à connecter les deux extrémités de raccordement 30, 32 à ses moyens d'injection d'eau pour refouler de l'eau de mer sous pression dans le collecteur 26 et dans les manches étanches flexibles 22. Cette pression de refoulement est comprise entre trois et dix bars, par exemple six bars.

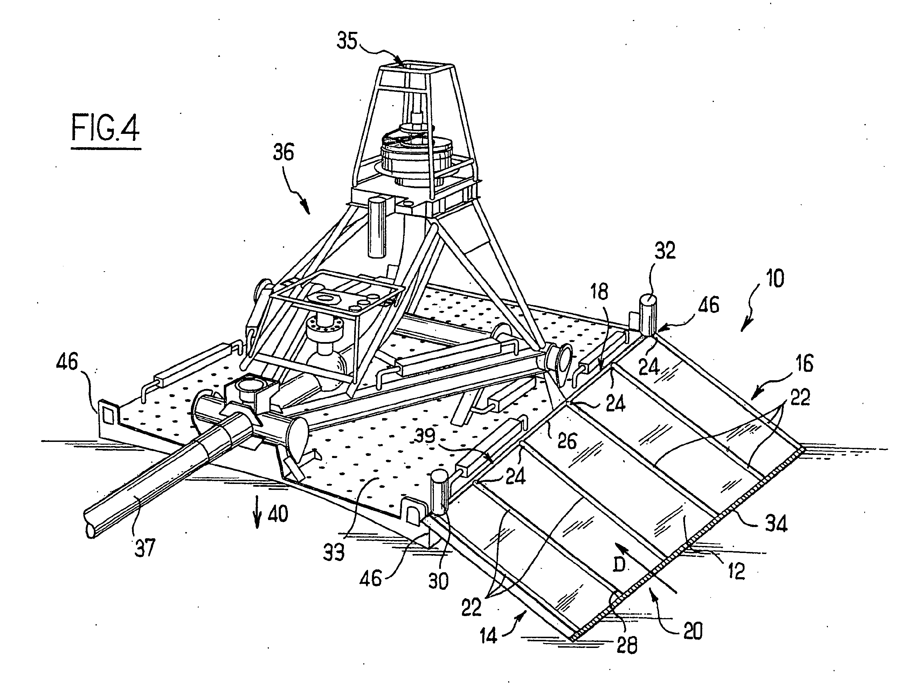

On se référera maintenant à la Figure 4 qui illustre l'élément de structure 36 et le tapis de protection 10 après que l'eau sous pression a été injectée dans le collecteur 26. En injectant de l'eau sous pression dans le collecteur 26, les manches étanches 22 se sont étendues longitudinalement en déroulant la nappe textile 12 dans un sens opposé au sens d'enroulement tout en entraînant la latte pesante 34 en rotation et en translation. Grâce à cette dernière, qui oppose néanmoins une certaine résistance à l'extension des manches étanches 22, la nappe textile 12 est maintenue en appui sur le fond marin 40. De la sorte, le tapis de protection 10 reste en appui sur le fond marin 40 malgré les courants de fond.

L'élément de structure 36 représenté sur les Figures 3 et 4, est équipé d'un tapis de protection 10, constitué d'une seule portion montée le long d'un seul bord 39, afin de simplifier le dessin. Et, cette portion étant sensiblement rectangulaire, le bord d'accrochage 18 mesurant entre 4 et 5 m, par exemple 4,5 m et les bords latéraux 14, 16, mesurant entre 3 et 4 m, par exemple 3,5 m, une fois déployée elle ne recouvre qu'une partie du fond marin autour de l'élément de structure 36. En conséquence, les trois autres bords de la plaque d'appui rectangulaire peuvent être équipés de la même façon de trois autres portions de tapis de protection 10 permettant de recouvrir le pourtour de l'élément de structure 36.

En outre, les trois autres portions étant de symétrie rectangulaire également, et les bords de la plaque d'appui rectangulaire 33 étant inclinés les uns par rapport aux autres d'un angle de 90°, les portions se rejoignent sensiblement dans les coins 46 de la plaque d'appui rectangulaire 33, en laissant quatre espaces libres de parties de fond 40 entre chaque portion de tapis de protection 10.

Afin de recouvrir ces parties de fond carrées, située dans le prolongement des diagonales de la plaque d'appui rectangulaire 33, les portions de tapis de protection 10 sont équipées de pans rabattables complémentaires.

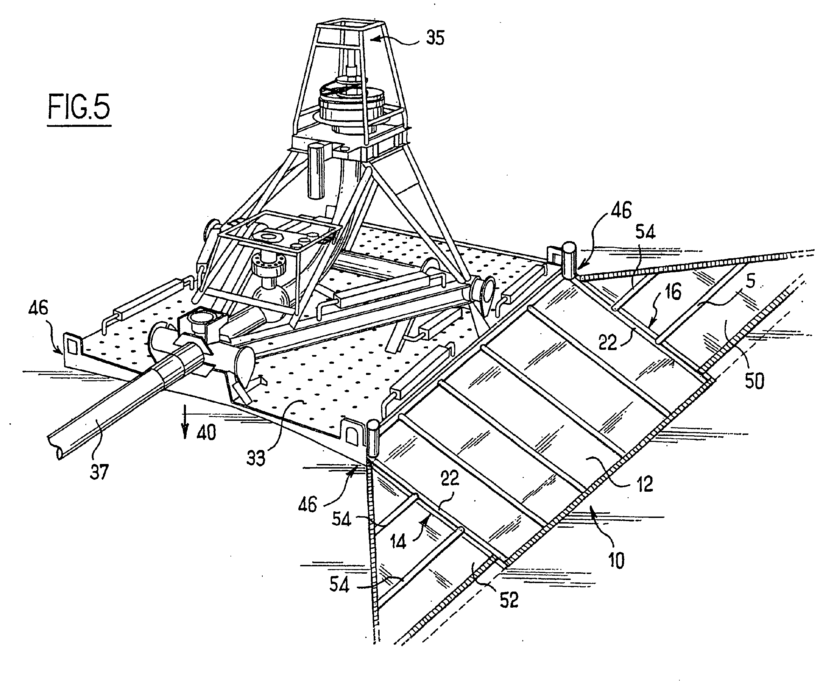

On se référera maintenant à la Figure 5, qui illustre selon une variante d'exécution, une portion de tapis de protection équipée de deux pans triangulaires rabattables.

On retrouve sur cette Figure 5 l'élément de structure 36 illustrés sur les deux Figures précédentes, équipé d'une portion de tapis de protection 10 identique. En revanche, la nappe textile 12 présente un pan triangulaire droit 50 articulé sur l'un des bords latéraux 16, et un pan triangulaire gauche 52 articulé sur l'autre bord latéral 14. Les plus grands côtés des pans triangulaires correspondant sensiblement respectivement aux deux diagonales de la plaque d'appui triangulaire.

En outre, ces pans triangulaires 50, 52 sont également équipés de manches étanches flexibles, ici des manches étanches secondaires 54 qui s'étendent sensiblement perpendiculairement aux bords latéraux opposés 14, 16 et qui sont respectivement raccordées au deux manches étanches 22 qui longent ces bords latéraux opposés 14, 16. Toutefois, on prévoit selon un autre mode de mise en oeuvre non représenté, un réseau d'alimentation secondaire directement raccordé aux manches étanches secondaires 54 et indépendant du collecteur 26. Ce réseau d'alimentation secondaire est alors susceptible d'être alimenté indépendamment du collecteur 26 et en particulier après que la partie rectangulaire de la nappe textile 12 a été déployée afin de simplifier le déploiement de ces pans triangulaires 50, 52 latéraux.

Ainsi, en équipant les trois autres portions de tapis de protection, ici non représentée, avec des pans triangulaires adaptés à coopérer tous ensemble, l'ensemble du pourtour de l'élément de structure 36 est susceptible d'être recouvert d'un tapis de protection sur une largeur d'environ 5 m. En outre, a fin de replier entièrement le tapis de protection 10 et ces différentes portions, y compris les pans triangulaires rabattables, ces derniers sont tout d'abord enroulés perpendiculairement aux bords latéraux opposés 14, 16 dans la direction de leurs manches étanches secondaires 54, vers leurs portions auxquelles elles sont rattachées et ensuite, chacune des portions est enroulée vers son bord d'accrochage respectif comme indiqué au regard de la Figure 3.

L'élément de structure 36, équipé du tapis de protection 10 ainsi replié et enroulé est susceptible d'être déposé sur le fond marin 40. Ensuite, ce tapis de protection 10, est susceptible d'être déployé au moyen des robots sous-marins, tel que décrit ci-dessus. Les portions rectangulaires du tapis de protection 10 qui longe les bords de la plaque d'appui rectangulaire commencent par se dérouler et ensuite une fois déroulée, ce sont les pans triangulaires rabattables qui se déroulent grâce aux manches étanches secondaires 54 qui s'étendent selon leur direction longitudinale et dans un sens opposé aux manches étanches 22 auxquelles elles sont reliées.

De la sorte, la vase, les particules ou les sédiments qui recouvrent le fond marin 40 autour de la plaque d'appui rectangulaire 33 sont entièrement recouverts par le tapis de protection 10. Ainsi malgré la distance relativement faible qui sépare l'extrémité de raccordement 35 et le fond marin 40, lorsque le robot sous-marin intervient pour raccorder par exemple une conduite montante à l'extrémité de raccordement 35, ses moyens de propulsion perturbent essentiellement les couches d'eau situées à la surface du tapis de protection 10 ce qui ne soulèvent aucune particule et n'augmente pas la turbidité de l'eau au voisinage de l'élément de structure 36.

Bien évidemment, l'objet de la présente invention est susceptible d'être appliqué à toute type de structure sous-marine, par exemple et selon une liste non limitative, à des terminaisons à l'extrémité des pipelines (PLETs pour : pipeline end termination, en langue anglaise), à des manifolds à l'extrémité des pipelines (PLEMs pour : pipeline end modules), à des raccords en T (ILTs : pour in line tees), ou encore à des modules de distribution à l'extrémité des ombilicaux (UDUs : pour umbilical distribution unit).

## Revendications

1. Méthode d'installation d'une structure sous-marine sur le fond marin (40), ledit fond marin étant recouvert de particules susceptibles d'être entraînées en suspension dans l'eau au-dessus dudit fond marin, l'installation de ladite structure sous-marine étant mise en oeuvre par un robot sous-marin qui est mû par des moyens de propulsion, ledit robot sous-marin comportant des moyens d'injection commandables en fluide sous pression, lesdits moyens de propulsion étant susceptibles d'entraîner l'eau du fond marin en mouvement et lesdites particules en suspension autour de ladite structure, ledit fond marin (40) étant recouvert autour de ladite structure sous-marine;
**caractérisée en ce qu'**on fournit un tapis de protection (10) flexible, ledit tapis de protection comportant des manches étanches flexibles (22) solidaires dudit tapis de protection et on raccorde lesdites manches étanches flexibles (22, 54) auxdits moyens d'injection commandables ; et **en ce que**, suivant une première étape, on plie ledit tapis de protection (10) et lesdites manches étanches flexibles (22), et suivant une seconde étape, on déplie ledit tapis de protection en commandant l'injection dudit fluide sous pression dans des manches étanches flexibles (22, 54) pour recouvrir ledit fond marin (40) et confiner lesdites particules sur ledit fond marin.

2. Méthode d'installation d'une structure sous-marine selon la revendication 1, **caractérisée en ce que**, suivant ladite première étape on replie ensemble ledit tapis de protection (10) et lesdites manches étanches flexibles (22, 54) par enroulement, selon une direction déterminée (D) et **en ce que** lesdites manches étanches flexibles (22, 54) sont solidarisées audit tapis de protection (10) selon ladite direction donnée.

3. Méthode d'installation d'une structure sous-marine la revendication 1 ou 2, **caractérisée en ce que**, ladite structure sous-marine comprenant au moins un élément de structure (36) adapté à être immergé depuis une installation de surface et à être appuyé sur ledit fond marin (40), on équipe ledit élément de structure dudit tapis de protection (10) duquel lesdites manches étanches flexibles sont solidaires, et on replie ledit tapis de protection avant l'immersion dudit élément de structure.

4. Méthode d'installation d'une structure sous-marine selon la revendication 3, **caractérisée en ce qu'**on divise ledit tapis de protection (10) en portions pour recouvrir le fond marin (40) autour de ladite structure sous-marine.

5. Ensemble pour l'installation d'une structure sous-marine sur le fond marin (40), ledit fond marin étant recouvert de particules susceptibles d'être entraînées en suspension dans l'eau au-dessus dudit fond marin, ledit ensemble comprenant un robot sous-marin mû par des moyens de propulsion pour mettre en oeuvre le montage de ladite structure sous-marine, ledit robot sous-marin comportant des moyens d'injection commandables en fluide sous pression, lesdits moyens de propulsion étant susceptibles d'entraîner l'eau du fond marin en mouvement et lesdites particules en suspension autour de ladite structure, ledit ensemble comprenant des moyens (22, 26, 54) pour recouvrir ledit fond marin autour de ladite structure sous-marine ;
**caractérisé en ce qu'**il comporte un tapis de protection (10), ledit tapis de protection (10) étant constitué d'un matériau flexible (12) adapté à être replié ;
et **en ce que** lesdits moyens pour recouvrir ledit fond marin comporte des manches étanches flexibles (22, 54) solidaires dudit tapis de protection, lesdites manches étanches flexibles (22, 54) étant munies de moyens de connexion permettant de raccorder lesdits moyens d'injection commandables auxdites manches étanches flexibles, lesdites manches étant susceptibles d'être portées d'un premier état dans lequel elles sont repliées et vides vers un second état dans lequel elles sont remplies d'un fluide sous pression et où elles s'étendent longitudinalement de manière à entraîner ledit tapis de protection en déroulement dans un sens opposé au sens d'enroulement, par quoi ledit tapis déroulé confine lesdites particules sur ledit fond marin (40).

6. Ensemble pour l'installation d'une structure sous-marine selon la revendication 5, caractérisé en ce ledit tapis de protection (10) est susceptible d'être replié par enroulement selon une direction déterminée et en ce que lesdites manches étanches flexibles (22, 54) sont solidarisées audit tapis de protection selon ladite direction donnée

7. Ensemble pour l'installation d'une structure sous-marine selon la revendication 5 ou 6, **caractérisé en ce que**, ladite structure sous-marine comprenant au moins un élément de structure (36) adapté à être immergé depuis une installation de surface et à être appuyé sur ledit fond marin (40), ledit élément de structure (36) est équipé dudit tapis de protection duquel lesdites manches sont solidaires, ledit tapis de protection (10) étant replié avant l'immersion dudit élément de structure.

8. Ensemble pour l'installation d'une structure sous-marine selon la revendication 7, **caractérisé en ce que** ledit tapis de protection (10) est divisé en portions réparties autour dudit élément de structure (36).

## Patentansprüche

1. Verfahren zur Installation einer Unterwasserstruktur auf dem Meeresboden (40), wobei der Meeresboden von Partikeln bedeckt ist, die zur Aufschwemmung in dem Wasser oberhalb des Meeresbodens angetrieben werden können, wobei die Installation der Unterwasserstruktur durch einen Unterwasser-Roboter durchgeführt wird, der durch Antriebsmittel bewegt wird, wobei der Unterwasser-Roboter betätigbare Mittel zum Einspritzen von unter Druck befindlichem Fluid aufweist, wobei die Antriebsmittel dafür geeignet sind, das Wasser des Meeresbodens zur Bewegung und die Partikel zur Aufschwemmung um die Struktur herum anzutreiben, wobei der Meeresboden (40) um die Unterwasserstruktur herum bedeckt ist,
**dadurch gekennzeichnet, dass** eine flexible Schutzmatte (10) bereitgestellt wird, wobei die Schutzmatte flexible abgedichtete Schläuche (22) aufweist, die mit der Schutzmatte fest verbunden sind, und die flexiblen abgedichteten Schläuche (22, 54) mit den betätigbaren Einspritzmitteln verbunden sind; und dass, gemäß einem ersten Schritt, die Schutzmatte (10) und die flexiblen abgedichteten Schläuche (22) zusammengelegt werden, und, gemäß einem zweiten Schritt, die Schutzmatte ausgebreitet wird, indem das Einspritzen des unter Druck befindlichen Fluides in flexible abgedichtete Schläuche (22, 54) bestätigt wird, um den Meeresboden (40) zu bedecken und um die Partikel auf dem Meeresboden einzugrenzen.

2. Verfahren zur Installation einer Unterwasserstruktur nach Anspruch 1, **dadurch gekennzeichnet, dass**, gemäß dem ersten Schritt, die Schutzmatte (10) und die flexiblen abgedichteten Schläuche (22, 54) durch Wickeln, in einer bestimmten Richtung (D), zusammen wieder zusammengelegt werden und dass die flexiblen abgedichteten Schläuche (22, 54) in der gegebenen Richtung mit der Schutzmatte (10) fest verbunden werden.

3. Verfahren zur Installation einer Unterwasserstruktur nach Anspruch 1 oder 2, **dadurch gekennzeichnet, dass**, da die Unterwasserstruktur mindestens ein Strukturelement (36) umfasst, das dafür geeignet ist, von einer Oberflächeneinrichtung aus eingetaucht und auf dem Meeresboden (40) abgestützt zu werden, das Strukturelement mit der Schutzmatte (10) versehen wird, mit der die flexiblen abgedichteten Schläuche (22, 54) fest verbunden sind, und die Schutzmatte vor dem Eintauchen des Strukturelements wieder zusammengelegt wird.

4. Verfahren zur Installation einer Unterwasserstruktur nach Anspruch 3, **dadurch gekennzeichnet, dass** die Schutzmatte (10) in Abschnitte unterteilt wird, um den Meeresboden (40) um die Unterwasserstruktur herum zu bedecken.

5. Anordnung zur Installation einer Unterwasserstruktur auf dem Meeresboden (40), wobei der Meeresboden von Partikeln bedeckt ist, die zur Aufschwemmung in dem Wasser oberhalb des Meeresbodens angetrieben werden können, wobei die Anordnung einen Unterwasser-Roboter umfasst, der durch Antriebsmittel bewegt wird, um die Montage der Unterwasserstruktur durchzuführen, wobei der Unterwasser-Roboter betätigbare Mittel zum Einspritzen von unter Druck befindlichem Fluid aufweist, wobei die Antriebsmittel dafür geeignet sind, das Wasser des Meeresbodens zur Bewegung und die Partikel zur Aufschwemmung um die Struktur herum anzutreiben, wobei die Anordnung Mittel (22, 26, 54) umfasst, um den Meeresboden um die Unterwasserstruktur herum zu bedecken; **dadurch gekennzeichnet, dass** sie eine Schutzmatte (10) aufweist, wobei die Schutzmatte (10) aus einem flexiblen Werkstoff (12) besteht, der wieder zusammenlegbar ist; und dass die Mittel zum Bedecken des Meeresbodens flexible abgedichtete Schläuche (22, 54) aufweisen, die mit der Schutzmatte fest verbunden sind, wobei die flexiblen abgedichteten Schläuche (22, 54) mit Verbindungsmitteln versehen sind, welche die Verbindung der bestätigbaren Einspritzmittel mit den flexiblen abgedichteten Schläuchen ermöglichen, wobei die Schläuche von einem ersten Zustand, indem sie wieder zusammengelegt und leer sind, in einen zweiten Zustand gebracht werden können, in dem sie mit einem unter Druck befindlichen Fluid gefüllt sind und in dem sie sich in Längsrichtung derart erstrecken, dass sie die Schutzmatte zur Abwicklung in einer Richtung antreiben, die der Wickelrichtung entgegengesetzt ist, wodurch die abgewickelte Matte die Partikel auf dem Meeresboden (40) eingrenzt.

6. Anordnung zur Installation einer Unterwasserstruktur nach Anspruch 5, **dadurch gekennzeichnet, dass** die Schutzmatte (10) durch Wickeln in einer bestimmten Richtung wieder zusammenlegbar ist und dass die flexiblen abgedichteten Schläuche (22, 54) in der gegebenen Richtung mit der Schutzmatte fest verbunden sind.

7. Anordnung zur Installation einer Unterwasserstruktur nach Anspruch 5 oder 6, **dadurch gekennzeichnet, dass**, da die Unterwasserstruktur mindestens ein Strukturelement (36) umfasst, das dafür geeignet ist, von einer Oberflächeneinrichtung aus eingetaucht und auf dem Meeresboden (40) abgestützt zu werden, das Strukturelement (36) mit der Schutzmatte versehen ist, mit der die Schläuche fest verbunden sind, wobei die Schutzmatte (10) vor dem Eintauchen des Strukturelements zusammengelegt ist.

8. Anordnung zur Installation einer Unterwasserstruktur nach Anspruch 7, **dadurch gekennzeichnet, dass** die Schutzmatte (10) in Abschnitte unterteilt wird, die um das Strukturelement (36) herum verteilt sind.

## Claims

1. A method of installing a subsea structure on the seabed (40), said seabed being covered with particles liable to be brought into suspension in the water above said seabed, said subsea structure being installed by a subsea robot being driven by propulsion means, said subsea robot including controllable means for injecting a pressurized fluid, said propulsion means being capable of moving the seabed water and said suspended particles around said structure, said seabed (40) being covered around said subsea structure;
**characterized in that** a flexible protective mat (10) is provided, said protective mat including flexible impermeable ducts (22) fastened to said protective mat and said flexible impermeable ducts (22, 54) are connected to said controllable injection means; and **in that**, in a first step, said protective mat (10) and said flexible impermeable ducts (22) are wound up and, in a second step, said protective mat is unwound by triggering the injection of pressurized fluid into flexible impermeable ducts (22, 54) in order to cover said seabed (40) and confine said particles on said seabed.

2. The method of installing a subsea structure as claimed in claim 1, **characterized in that**, in said first step, said protective mat (10) and said flexible impermeable ducts (22, 54) are wound up together by being rolled up in a defined direction (D) and **in that** said flexible impermeable ducts (22, 54) are fastened to said protective mat (10) in said given direction.

3. The method of installing a subsea structure as claimed in any one of claims 1 or 2, **characterized in that**, since said subsea structure comprises at least one structural element (36) designed to be submerged from a surface installation and to rest on said seabed (40), said structural element is equipped with said protective mat (10) to which said flexible impermeable ducts are fastened, and, before submersion of said structural element, said protective mat is wound up.

4. The method of installing a subsea structure as claimed in claim 3, **characterized in that** said protective mat (10) is divided into portions in order to cover the seabed (40) around said subsea structure.

5. An assembly for installing a subsea structure on the seabed (40), said seabed being covered with particles liable to be brought into suspension in the water above said seabed, said assembly comprising a subsea robot driven by propulsion means in order to carry out the mounting of said subsea structure, said subsea robot including controllable means for injecting a pressurized fluid, said propulsion means being capable of moving the seabed water and said suspended particles around said structure, said assembly including means (22, 26, 54) for covering said seabed around said subsea structure;
**characterized in that** it includes a protective mat (10), said protective mat (10) consisting of a flexible material (12) suitable for being wound up;
and **in that** said means for covering said seabed include flexible impermeable ducts (22, 54) fastened to said protective mat, said flexible impermeable ducts (22, 54) being provided with connection means for connecting said controllable injection means to said flexible impermeable ducts, said ducts being capable of being brought from a first state in which they are wound up and drained to a second state in which they are filled with a pressurized fluid and in which they extend longitudinally, so as to cause said protective mat to be unrolled in the opposite direction to the rolling-up direction, whereby said unrolled mat confines said particles on said seabed (40).

6. The assembly for installing a subsea structure as claimed in claim 5, **characterized in that** said protective mat (10) is capable of being wound up by being rolled up in a defined direction and **in that** said flexible impermeable ducts (22, 54) are fastened to said protective mat in said given direction.

7. The assembly for installing a subsea structure as claimed in any one of claims 5 or 6, **characterized in that**, since said subsea structure comprises at least one structural element (36) designed to be submerged from a surface installation and to rest on said seabed (40), said structural element (36) is equipped with said protective mat to which said ducts are fastened, said protective mat (10) being wound up before submersion of said structural element.

8. The assembly for installing a subsea structure as claimed in claim 7, **characterized in that** said protective mat (10) is divided into portions distributed around said structural element (36).
